# EUROPEAN PATENT APPLICATION

(11) **EP 2 555 041 A1**
(43) Date of publication of application: **06.02.2013**
(21) Application number: 11762218.3
(22) Date of filing: 28.03.2011
(51) Int. Cl.: G02B 27/22, G09G 3/20, G09G 3/28, H04N 13/04

(54) **IMAGE DISPLAY DEVICE AND SHUTTER SPECTACLES**

(30) Priority: 29.03.2010 JP 2010074670
(71) Applicant: Panasonic Corporation, Kadoma-shi Osaka 571-8501 (JP)
(72) Inventor: SHIOZAKI, Yuya, Osaka-shi, Osaka 540-6207 (JP)
(74) Representative: Vigand, Philippe
(86) International application number: PCT/JP2011/001806
(87) International publication number: WO 2011/121969

(57) **Abstract**

The shutter glasses normally control a right-eye shutter and left-eye shutter even if a control signal to be received is temporarily missed. The image display section displays an image by alternately repeating a right-eye field and a left-eye field, and transmits first control signals synchronously with the right-eye field and left-eye field. The shutter glasses receive the first control signals, and have a right-eye shutter and left-eye shutter for transmitting and blocking visible light. The shutter glasses include a shutter control circuit that stores first timing information for a plurality of fields based on the received first control signals for the plurality of fields and generates second control signals based on the stored first timing information for the plurality of fields. The shutter glasses control the transmission and blocking of visible light at the right-eye shutter and left-eye shutter using the second control signals.

## Description

### TECHNICAL FIELD

The present invention relates to an image display apparatus allowing that a user uses shutter glasses to three-dimensionally view right-eye images and left-eye images that are displayed on a display device in a temporally alternate manner, and to the shutter glasses.

### BACKGROUND ART

An plasma display panel (hereinafter referred to as "panel") typical as a display device has many discharge cells between a front substrate and a rear substrate that are faced to each other. The front substrate has the following elements:
a plurality of display electrode pairs disposed in parallel on a front glass substrate; and
a dielectric layer and a protective layer for covering the display electrode pairs.
Here, each display electrode pair is formed of a pair of scan electrode and sustain electrode.

The rear substrate has the following elements:
a plurality of data electrodes disposed in parallel on a rear glass substrate;
a dielectric layer for covering the data electrodes;
a plurality of barrier ribs disposed on the dielectric layer in parallel with the data electrodes; and
phosphor layers disposed on the surface of the dielectric layer and on side surfaces of the barrier ribs.

The front substrate and rear substrate are faced to each other so that the display electrode pairs and the data electrodes three-dimensionally intersect, and are sealed. Discharge gas containing xenon is filled into a discharge space in the sealed product. Discharge cells are disposed in intersecting parts of the display electrode pairs and the data electrodes. In the panel having this structure, ultraviolet rays are emitted by gas discharge in each discharge cell. The ultraviolet rays excite respective phosphors of red (R), green (G), and blue (B) to emit light, and thus provide color image display.

A subfield method is generally used as a method of driving the panel. In this subfield method, one field is divided into a plurality of subfields, and light is emitted or light is not emitted in each discharge cell in each subfield, thereby performing gradation display. Each subfield has an initializing period, an address period, and a sustain period.

In the initializing period, an initializing waveform is applied to each scan electrode, and initializing discharge is caused in each discharge cell. Thus, wall charge required for a subsequent address operation is formed in each discharge cell, and a priming particle (an excitation particle for causing discharge) for stably causing address discharge is generated.

In the address period, a scan pulse is sequentially applied to scan electrodes, and an address pulse is selectively applied to data electrodes based on an image signal to be displayed. Thus, address discharge is caused between the scan electrode and the data electrode of the discharge cell to emit light, thereby producing wall charge in the discharge cell.

In a sustain period, as many sustain pulses as a number based on the luminance weight determined for each subfield are alternately applied to the display electrode pairs formed of the scan electrodes and the sustain electrodes. Thus, sustain discharge is caused in the discharge cell having undergone address discharge, thereby emitting light in the phosphor layer of this discharge cell (hereinafter, light emission by sustain discharge in a discharge cell is referred to as "lighting", and no light emission is referred to as "no-lighting"). Thus, light is emitted in each discharge cell at a luminance corresponding to the luminance weight. Thus, light is emitted at a luminance corresponding to the gradation value of an image signal in each discharge cell of the panel, and an image is displayed on the image display region of the panel.

A method has been studied which displays a three-dimensional (hereinafter referred to as "3D") image (hereinafter referred to as "3D image") capable of being viewed three-dimensionally using such a panel.

One 3D image is constituted by one right-eye image and one left-eye image. When the 3D image is displayed on the panel, the right-eye image and left-eye image are temporally alternately displayed on the panel. A user views the 3D image displayed on the panel using special glasses called shutter glasses having a right-eye shutter and a left-eye shutter.

The shutter glasses receive a control signal transmitted from an image display section included in the image display apparatus, and the right-eye shutter and left-eye shutter temporally alternately open and close synchronously with a field for displaying the right-eye image and a field for displaying the left-eye image, respectively. In other words, in a period in which the right-eye image is displayed on the panel, the right-eye shutter is opened (visible light is transmitted) and the left-eye shutter is closed (visible light is blocked). In a period in which the left-eye image is displayed, the left-eye shutter is opened and the right-eye shutter is closed. Thus, the user can observe the right-eye image only with the right eye and the left-eye image only with the left eye, and can 3D-view the 3D image displayed on the panel.

A method is known which controls the transmission and blocking of the shutters of the shutter glasses synchronously with the start of the address period of the first subfield of each of the field for displaying the right-eye image and the field for displaying the left-eye image (for example, Patent Literature 1).

However, when the control signal transmitted from the image display section is blocked by a blocking object or the like and does not arrive at the shutter glasses, and the control signal to be received by the shutter glasses is temporarily blocked, the shutter glasses do not operate normally. For example, the shutter glasses stop the operation in a state where one shutter is blocked, or stop the operation in a state where both shutters are blocked dependently on the blocking timing of the control signal. In such a case, a user cannot normally 3D-view a 3D image displayed on the panel.

### Citation List

### Patent Literature

**PLT 1**
   Unexamined Japanese Patent Publication No. 2000-112428

### SUMMARY OF THE INVENTION

The present invention provides an image display apparatus including an image display section and shutter glasses. The image display section displays an image by alternately repeating a right-eye field for displaying a right-eye image signal and a left-eye field for displaying a left-eye image signal, and transmits first control signals synchronous with the right-eye field and left-eye field. The shutter glasses receive the first control signals, and have a right-eye shutter and left-eye shutter for transmitting and blocking visible light. The shutter glasses include a shutter control circuit for storing first timing information for a plurality of fields based on the received first control signals for the plurality of fields and for generating second control signals based on the stored first timing information for the plurality of fields. The shutter glasses controls the transmission and blocking of visible light at the right-eye shutter and left-eye shutter using the second control signal.

Thus, even if the control signal to be received is temporarily missed, the shutter glasses can normally control the right-eye shutter and left-eye shutter. Therefore, even if the control signal for the shutter glasses that is transmitted from the image display apparatus and received by the shutter glasses is temporarily missed, a user who views a 3D image displayed on the image display section through the shutter glasses can normally 3D-view the 3D image displayed on the image display section.

In the image display apparatus of the present invention, the shutter control circuit may include the following elements:
a clock generation section;
a counter section that performs counting based on the clock generated by the clock generation section and is reset with a received first control signal;
a storage section for storing output signals supplied from the counter section when the counter section receives the first control signals, as first timing information for a plurality of fields;
a timing setting section for setting second timing information based on the first timing information for the plurality of fields stored in the storage section; and
a control signal generation section that compares the second timing information set by the timing setting section with the output from the counter section and generates second control signals.

In the image display apparatus of the present invention, the shutter control circuit may have a configuration where, when a half or more than the half of the first control signals for the plurality of fields are missed, both of the right-eye shutter and left-eye shutter are made to transmit visible light.

Thus, the shutter glasses can prevent that, when the control signal to be received is missed, the operation stops in a state where one shutter is closed or the operation stops in a state where both shutters are closed, and hence can prevent that the field of view of one eye or both eyes of the user is kept to be blocked.

The image display section of the present invention may be formed of a plasma display panel.

The present invention provides shutter glasses. The shutter glasses are used for viewing an image displayed on an image display section. The image display section displays the image by alternately repeating a right-eye field for displaying a right-eye image signal and a left-eye field for displaying a left-eye image signal, and transmits first control signals synchronous with the right-eye field and left-eye field. The shutter glasses receive the first control signals, and have a right-eye shutter and left-eye shutter for transmitting and blocking visible light. The shutter glasses include a shutter control circuit that stores first timing information for a plurality of fields based on the received first control signals for the plurality of fields and generates second control signals based on the stored first timing information for the plurality of fields. The shutter glasses control the transmission and blocking of visible light at the right-eye shutter and left-eye shutter using the second control signals.

Thus, even if a control signal to be received is temporarily missed, the shutter glasses can normally control the right-eye shutter and left-eye shutter. Therefore, even if the control signal for the shutter glasses that is transmitted from the image display apparatus and received by the shutter glasses is temporarily missed by a blocking object or the like, a user who views a 3D image displayed on the image display section through the shutter glasses can normally 3D-view the 3D image displayed on the image display section.

In the shutter glasses of the present invention, the shutter control circuit may include the following elements:
a clock generation section;
a counter section that performs counting based on the clock generated by the clock generation section and is reset with a received first control signal;
a storage section for storing the output signals supplied from the counter section when the counter section receives first control signals, as first timing information for a plurality of fields;
a timing setting section for setting second timing information based on the first timing information for the plurality of fields stored in the storage section; and
a control signal generation section that compares the second timing information set by the timing setting section with the output from the counter section and generates second control signals.

In the shutter glasses of the present invention, the shutter control circuit may have a configuration where, when a half or more than half of the first control signals for the plurality of fields are missed, both of the right-eye shutter and left-eye shutter are made to transmit visible light.

Thus, the shutter glasses can prevent that, when the control signal to be received is missed, the operation stops in a state where one shutter is closed or the operation stops in a state where both shutters are closed, and hence can prevent that the field of view of one eye or both eyes of the user is kept to be blocked.

### BRIEF DESCRIPTION OF DRAWINGS

Fig. 1 is an exploded perspective view showing a structure of a panel used in a plasma display apparatus in accordance with an exemplary embodiment of the present invention.
Fig. 2 is an electrode array diagram of the panel used in the plasma display apparatus in accordance with the exemplary embodiment of the present invention.
Fig. 3 is a circuit block diagram of the plasma display apparatus in accordance with the exemplary embodiment of the present invention.
Fig. 4 is a diagram for schematically showing a driving voltage waveform to be applied to each electrode of the panel used in the plasma display apparatus in accordance with the exemplary embodiment of the present invention.
Fig. 5 is a diagram for schematically showing a subfield structure, first control signals, and opening/closing operations of shutter glasses in accordance with the exemplary embodiment of the present invention.
Fig. 6 is a circuit block diagram of a shutter control circuit disposed in the shutter glasses of the plasma display apparatus in accordance with the exemplary embodiment of the present invention.
Fig. 7 is a timing chart for showing an operation of the shutter glasses of the plasma display apparatus in accordance with the exemplary embodiment of the present invention.

### DESCRIPTION OF EMBODIMENTS

An image display apparatus in accordance with an exemplary embodiment of the present invention will be described hereinafter with reference to the accompanying drawings while a plasma display apparatus using a plasma display panel is taken as an example.

### EXEMPLARY EMBODIMENT

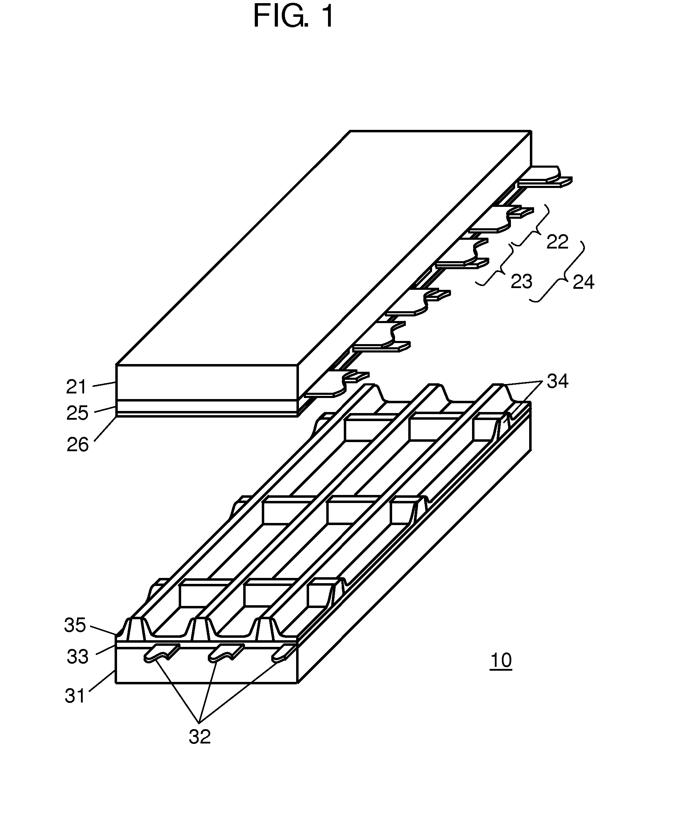

Fig. 1 is an exploded perspective view showing the structure of panel 10 used in a plasma display apparatus in accordance with an exemplary embodiment of the present invention. A plurality of display electrode pairs 24 formed of scan electrodes 22 and sustain electrodes 23 is disposed on glass-made front substrate 21. Dielectric layer 25 is formed so as to cover scan electrodes 22 and sustain electrodes 23, and protective layer 26 is formed on dielectric layer 25.

Protective layer 26 is made of a material mainly made of magnesium oxide (MgO).

A plurality of data electrodes 32 is formed on glass-made rear substrate 31, dielectric layer 33 is formed so as to cover data electrodes 32, and mesh barrier ribs 34 are formed on dielectric layer 33. Phosphor layers 35 for emitting lights of respective colors of red (R), green (G), and blue (B) are formed on the side surfaces of barrier ribs 34 and on dielectric layer 33.

Front substrate 21 and rear substrate 31 are faced to each other so that display electrode pairs 24 cross data electrodes 32 with a micro discharge space sandwiched between them, and the outer peripheries of them are sealed by a sealing material such as glass frit. The discharge space is filled with mixed gas of neon and xenon as discharge gas, for example.

The discharge space is partitioned into a plurality of sections by barrier ribs 34. Discharge cells are formed in the intersecting parts of display electrode pairs 24 and data electrodes 32. Thus, the plurality of discharge cells are formed on panel 10.

Then, discharge is caused in the discharge cells, and light is emitted (lighting in the discharge cells) in phosphor layers 35 of them, thereby displaying a color image on panel 10.

In panel 10, one pixel is formed of three consecutive discharge cells arranged in the extending direction of display electrode pairs 24. The three discharge cells are a discharge cell for emitting light of red color (R), a discharge cell for emitting light of green color (G), and a discharge cell for emitting light of blue color (B).

The structure of panel 10 is not limited to the above-mentioned one, but may be a structure having striped barrier ribs arranged only in the vertical direction (column direction), for example.

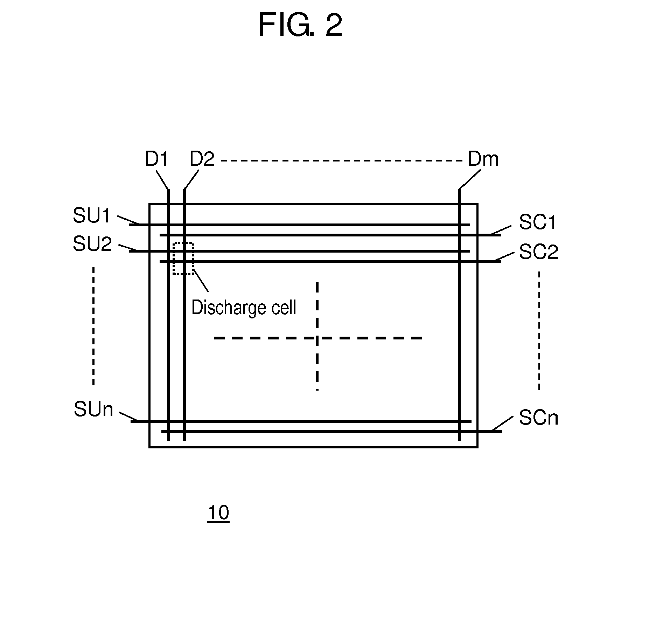

Fig. 2 is an electrode array diagram of panel 10 used in the plasma display apparatus in accordance with the first exemplary embodiment of the present invention. Panel 10 has n scan electrode SC1 through scan electrode SCn (scan electrodes 22 in Fig. 1) and n sustain electrode SU1 through sustain electrode SUn (sustain electrodes 23 in Fig. 1) both extended horizontally (row direction), and m data electrode D1 through data electrode Dm (data electrodes 32 in Fig. 1) extended vertically (column direction). A discharge cell is formed in the part where a pair of scan electrode SCi (i is 1 through n) and sustain electrode SUi intersect with one data electrode Dj (j is 1 through m). In other words, on one display electrode pair 24, m discharge cells are formed and m/3 pixels are formed. Thus, mxn discharge cells are formed in the discharge space, the region having mxn discharge cells defines the image display region of panel 10. In the panel where the number of pixels is 1920×1080, for example, m is 1920x3 and n is 1080.

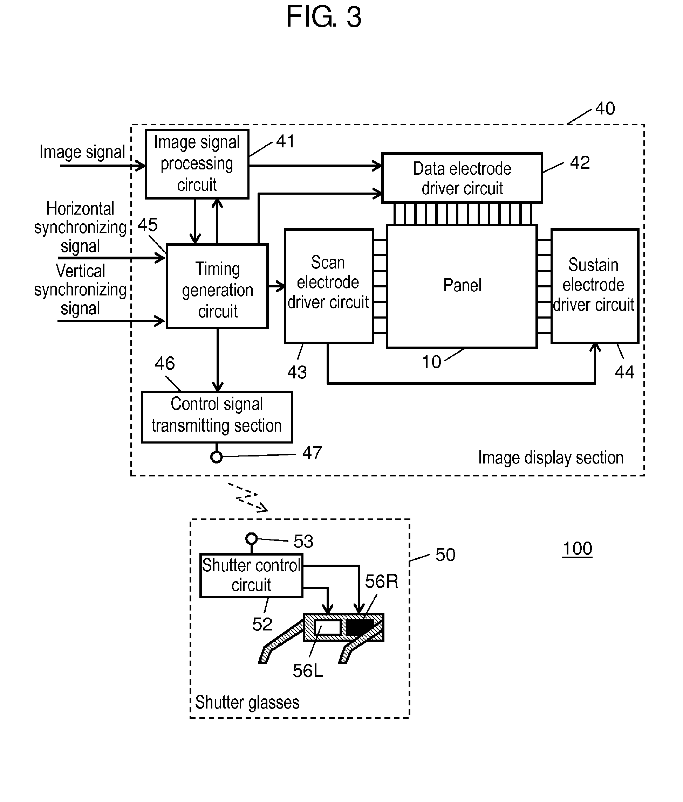

Fig. 3 is a circuit block diagram of plasma display apparatus 100 in accordance with the exemplary embodiment of the present invention. Plasma display apparatus 100 of the exemplary embodiment includes image display section 40 and shutter glasses 50.

Image display section 40 includes the following elements:
panel 10;
image signal processing circuit 41;
data electrode driver circuit 42;
scan electrode driver circuit 43;
sustain electrode driver circuit 44;
timing generation circuit 45;
control signal transmitting section 46; and
a power supply circuit (not shown) for supplying power required for each circuit block.

Image signal processing circuit 41 assigns a gradation value to each discharge cell based on an input image signal. Then, image signal processing circuit 41 converts the gradation value into image data indicating light emission and no light emission in each subfield (light emission and no light emission are made to correspond to digital signals, "1" and "0"). In other words, image signal processing circuit 41 converts the image signal in each field into image data indicating the light emission and no light emission in each subfield.

For example, when the input image signal includes an R signal, a G signal, and a B signal, image signal processing circuit 41 assigns each gradation value of R, G, and B to each discharge cell based on the R signal, the G signal, and the B signal. When the input image signal includes a luminance signal (Y signal) and a chroma signal (C signal, R-Y signal and B-Y signal, or u signal and v signal), image signal processing circuit 41 calculates the R signal, the G signal, and the B signal based on the luminance signal and chroma signal, and then assigns each gradation value (gradation value represented in one field) of R, G, and B to each discharge cell. Image signal processing circuit 41 converts each gradation value of R, G, and B assigned to each discharge cell into image data that indicates light emission or no light emission in each subfield.

When the input image signal is an image signal for 3D vision having a right-eye image signal and a left-eye image signal, and the image signal is displayed on panel 10, the right-eye image signal and left-eye image signal are alternately input to image signal processing circuit 41 in each field. Therefore, image signal processing circuit 41 converts the right-eye image signal into right-eye image data, and converts the left-eye image signal into left-eye image data.

Timing generation circuit 45 generates various timing signals for controlling operations of respective circuit blocks based on a horizontal synchronizing signal and a vertical synchronizing signal. Timing generation circuit 45 supplies the generated timing signals to respective circuit blocks (image signal processing circuit 41, data electrode driver circuit 42, scan electrode driver circuit 43, and sustain electrode driver circuit 44). Timing generation circuit 45 outputs, to control signal transmitting section 46, a first control signal for controlling the opening/closing of the shutters of shutter glasses 50 synchronously with the right-eye field and left-eye field.

Control signal transmitting section 46 has light emitting element 47 such as a light emitting diode (LED). Control signal transmitting section 46 encodes the first control signal, converts it into a serial signal, converts the serial signal into a light signal such as infrared rays using light emitting element 47, and transmits the light signal.

Thus, timing generation circuit 45 generates the first control signal, and control signal transmitting section 46 converts the first control signal into a light signal and transmits the light signal to shutter glasses 50.

Data electrode driver circuit 42 converts data in each subfield constituting the image data including right-eye image data and left-eye image data into a signal corresponding to each of data electrode D1 through data electrode Dm. Data electrode driver circuit 42 drives each of data electrode D1 through data electrode Dm based on the timing signal supplied from timing generation circuit 45. Data electrode driver circuit 42 generates an address pulse and applies it to each of data electrode D1 through data electrode Dm in the address period.

Scan electrode driver circuit 43 has a ramp waveform generation circuit, a sustain pulse generation circuit, and a scan pulse generation circuit (not shown in Fig. 3). Scan electrode driver circuit 43 generates a driving voltage waveform based on a timing signal supplied from timing generation circuit 45, and applies it to each of scan electrode SC1 through scan electrode SCn. The ramp waveform generation circuit generates an initializing waveform to be applied to scan electrode SC1 through scan electrode SCn based on the timing signal in the initializing period. The sustain pulse generation circuit generates a sustain pulse to be applied to scan electrode SC1 through scan electrode SCn based on the timing signal in the sustain period. The scan pulse generation circuit has a plurality of scan electrode driver ICs (scan ICs), and generates a scan pulse to be applied to scan electrode SC1 through scan electrode SCn based on the timing signal in the address period.

Sustain electrode driver circuit 44 has a sustain pulse generation circuit and a circuit (not shown in Fig. 3) for generating voltage Ve. Sustain electrode driver circuit 44 generates a driving voltage waveform based on the timing signal supplied from timing generation circuit 45, and applies it to each of sustain electrode SU1 through sustain electrode SUn. Sustain electrode driver circuit 44 generates a sustain pulse based on the timing signal and applies it to sustain electrode SU1 through sustain electrode SUn in the sustain period.

Thus, image display section 40 displays a 3D image on panel 10 by temporally alternately repeating a right-eye field for displaying a right-eye image signal and a left-eye field for displaying a left-eye image signal. Image display section 40 generates the first control signals synchronous with the right-eye field and left-eye field, converts them into light signals, and transmits the light signals to shutter glasses 50.

Shutter glasses 50 include shutter control circuit 52, right-eye shutter 56R, and left-eye shutter 56L.

Shutter control circuit 52 receives the first control signals converted into the light signals using light receiving element 53 such as a photodiode, and reproduces the light signals to the first control signals.

Right-eye shutter 56R and left-eye shutter 56L are optical shutters that are made of liquid crystal, for example, and can be independently opened or closed.

Shutter glasses 50 controls the opening/closing operation (the state for transmitting visible light and the state for blocking visible light are repeated) of right-eye shutter 56R and left-eye shutter 56L based on the first control signals that are transmitted from control signal transmitting section 46 and received and reproduced by shutter control circuit 52.

Shutter glasses 50 of the present exemplary embodiment do not directly use the first control signals that are reproduced by shutter control circuit 52 in order to control right-eye shutter 56R and left-eye shutter 56L. Shutter control circuit 52 generates second control signals based on the reproduced first control signals (details are described later). Shutter glasses 50 control right-eye shutter 56R and left-eye shutter 56L using the second control signals.

Shutter glasses 50 receive the first control signals, and have right-eye shutter 56R and left-eye shutter 56L for transmitting and blocking visible light.

In the present invention, the material constituting right-eye shutter 56R and left-eye shutter 56L is not limited to liquid crystal. The material constituting the shutters may be any material as long as the material allows speedy switch between blocking and transmission of visible light.

Next, an operation of image display section 40 is described. Image display section 40 performs gradation display by a subfield method. In this subfield method, image display section 40 divides one field into a plurality of subfields on the time axis, and sets luminance weight for each subfield. Each subfield has an initializing period, an address period, and a sustain period. Image display section 40 displays an image on panel 10 by controlling the light emission or no light emission in each discharge cell in each subfield.

The luminance weight means the ratio between the luminances displayed in respective subfields, and as many sustain pulses as the number corresponding to the luminance weight are generated in each subfield in the sustain period. Therefore, in the subfield of luminance weight "8", light is emitted at a luminance about eight times that in the subfield of luminance weight "1", and light is emitted at a luminance about four times that in the subfield of luminance weight "2". Therefore, various gradations can be displayed by selectively emitting light in each subfield using a combination corresponding to the image signal, and an image can be displayed on panel 10.

In the present exemplary embodiment, an image signal input to plasma display apparatus 100 is an image signal for 3D vision where a right-eye image signal and left-eye image signal are alternately repeated in each field. The image (3D image) for 3D vision consisting of a right-eye image and left-eye image is displayed on panel 10 by repeatedly displaying, on panel 10, the right-eye field for displaying the right-eye image signal and the left-eye field for displaying the left-eye image signal in a temporally alternate manner.

Therefore, the number of 3D images displayed per unit time (for example, one second) is a half the field frequency (the number of fields generated per second). For example, when the field frequency is 60 Hz, the number of right-eye images displayed per second is 30 and the number of left-eye images displayed per second is 30. Therefore, 30 3D images are displayed on panel 10 per second. In the present exemplary embodiment, the field frequency is set at twice (e.g. 120 Hz) the usual value, and fluctuation (flicker) in an image apt to occur when an image of low field frequency is displayed is reduced.

A user views a 3D image displayed on panel 10 through shutter glasses 50 that independently open and close right-eye shutter 56R and left-eye shutter 56L synchronously with the right-eye field and left-eye field. Thus, the user can observe the right-eye image only with the right eye and the left-eye image only with the left eye, so that the user can 3D-views the 3D image displayed on panel 10.

Only the image signal to be displayed differs between the right-eye field and left-eye field. The right-eye field and left-eye field have the same structure of the field such as the number of subfields constituting one field, luminance weight of each subfield, and array of the subfields. When no differentiation between "right-eye" and "left-eye" is required, the right-eye field and the left-eye field are simply referred to as fields, and the right-eye image signal and the left-eye image signal are simply referred to as image signals. The structure of the field is also referred to as a subfield structure.

First, the structure of one field and the driving voltage waveform applied to each electrode are described. Each of the right-eye field and left-eye field has a plurality of subfields, and each subfield has an initializing period, an address period, and a sustain period.

In the initializing period, an initializing operation of causing the initializing discharge in a discharge cell and producing, on each electrode, wall charge required for address discharge in the subsequent address period is performed. The initializing operation includes the following operations:
a forced initializing operation of forcibly causing initializing discharge in a discharge cell regardless of the existence of the preceding discharge; and
a selective initializing operation of causing initializing discharge only in a discharge cell having undergone address discharge in the address period in the immediately preceding subfield.

In the address period, the address operation is performed where a scan pulse is applied to scan electrodes 22, an address pulse is selectively applied to data electrodes 32, address discharge is selectively caused in a discharge cell to emit light, and wall charge for generating sustain discharge in the subsequent sustain period is produced in the discharge cell.

In the sustain period, the sustain operation is performed where as many sustain pulses as the number derived by multiplying the luminance weight set for each subfield by a predetermined proportionality constant are alternately applied to scan electrode 22 and sustain electrode 23, sustain discharge is caused in the discharge cell having undergone address discharge in the immediately preceding address period, and light is emitted in the discharge cell. This proportionality constant is luminance magnification. For example, when the luminance magnification is two, four sustain pulses are applied to each of scan electrode 22 and sustain electrode 23 in the sustain period of the subfield of luminance weight "2". Therefore, the number of sustain pulses occurring in the sustain period is 8.

In the present exemplary embodiment, an example where one field is constituted by five subfields (subfield SF1, subfield SF2, ..., subfield SF5) is described.

Subfield SF1 through subfield SF5 have luminance weights of (16, 8, 4, 2, 1). Thus, in the present exemplary embodiment, the luminance weights of respective subfields are set in descending order: the luminance weight of subfield SF1, which is the first subfield in the field, is the largest, the luminance weights of the subsequent subfields decrease sequentially, and the luminance weight of subfield SF5, which is the final subfield in the field, is the smallest.

In the initializing period of subfield SF1, which is the first subfield in the field, the forced initializing operation is performed. In the initializing period of subfield SF2 through subfield SF5, the selective initializing operation is performed. Thus, light emission related to no image display is only light emission by the discharge of the forced initializing operation in subfield SF1. The luminance of black level, which is the luminance in a black display region that does not cause sustain discharge, is therefore obtained only by weak light emission in the forced initializing operation. This allows display of an image of sharp contrast on panel 10.

In the present exemplary embodiment, however, the number of subfields constituting one field and the luminance weight of each subfield are not limited to the above-mentioned values. The subfield structure may be changed based on an image signal or the like.

Next, a driving voltage waveform for driving panel 10 and its operation are described.

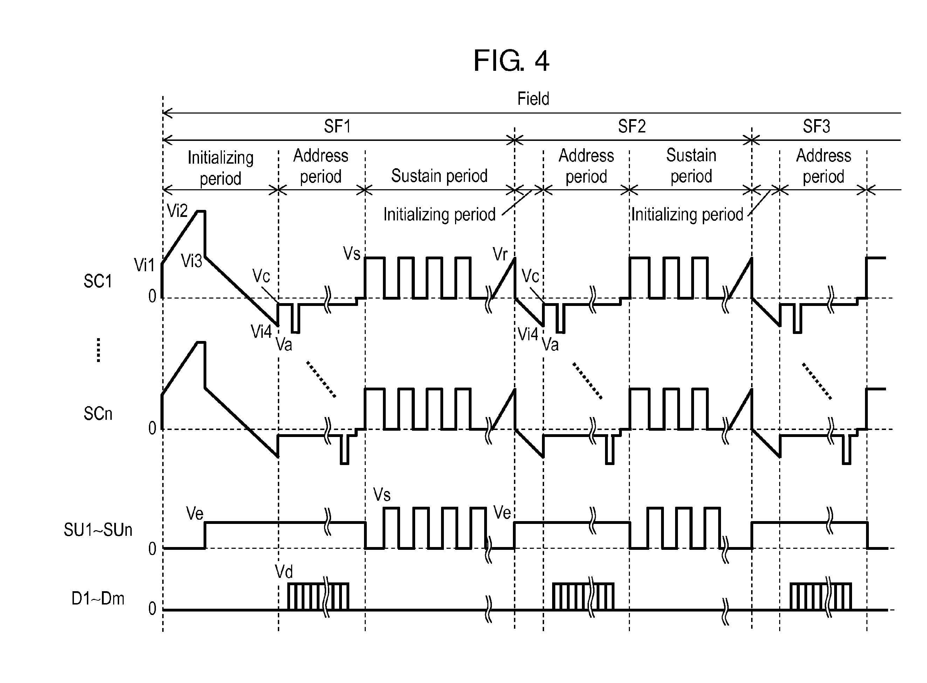

Fig. 4 is a diagram for showing a driving voltage waveform to be applied to each electrode of panel 10 used in plasma display apparatus 100 in accordance with the exemplary embodiment of the present invention. Fig. 4 shows driving voltage waveforms applied to scan electrode SC1 for firstly performing an address operation in the address period, scan electrode SCn for finally performing the address operation in the address period, sustain electrode SU1 through sustain electrode SUn, and data electrode D1 through data electrode Dm.

Fig. 4 shows driving voltage waveforms in a range from subfield SF1 to a midway of subfield SF3. The forced initializing operation is performed in subfield SF1, and the selective initializing operation is performed in subfield SF2 and subfield SF3. Therefore, the waveform of the driving voltage to be applied to scan electrode 22 in the initializing period differs between subfield SF1 and subfield SF2 and between subfield SF1 and subfield SF3.

The driving voltage waveforms in the other subfields are substantially similar to the driving voltage waveforms in subfield SF2 and subfield SF3 except for the number of sustain pulses generated in the sustain period. Scan electrode SCi, sustain electrode SUi, and data electrode Dk described later are selected from the respective types of electrodes based on image data (which indicates light emission or no light emission in each subfield).

First, subfield SF1 is described.

In the first half of the initializing period of subfield SF1, voltage 0 (V) is applied to data electrode D1 through data electrode Dm and sustain electrode SU1 through sustain electrode SUn. To scan electrode SC1 through scan electrode SCn, voltage Vi1 is applied and then a ramp waveform voltage, which gently increases from voltage Vi1 to voltage Vi2, is applied. Voltage Vi1 is set at the voltage lower than the discharge start voltage with respect to sustain electrode SU1 through sustain electrode SUn. Voltage Vi2 is set at the voltage exceeding the discharge start voltage with respect to sustain electrode SU1 through sustain electrode SUn.

While the ramp waveform voltage increases, feeble initializing discharge continuously occurs between scan electrode SC1 through scan electrode SCn and sustain electrode SU1 through sustain electrode SUn, and feeble initializing discharge continuously occurs between scan electrode SC1 through scan electrode SCn and data electrode D1 through data electrode Dm. Then, negative-polarity wall voltage is accumulated on scan electrode SC1 through scan electrode SCn, and positive-polarity wall voltage is accumulated on data electrode D1 through data electrode Dm and sustain electrode SU1 through sustain electrode SUn. The wall voltage on the electrode means voltage generated by the wall charge accumulated on the dielectric layer for covering the electrodes, the protective layer, or the phosphor layers.

In the latter half of the initializing period of subfield SF1, positive-polarity voltage Ve is applied to sustain electrode SU1 through sustain electrode SUn, and voltage 0 (V) is applied to data electrode D1 through data electrode Dm. Ramp waveform voltage, which gently decreases from voltage Vi3 to negative-polarity voltage Vi4, is applied to scan electrode SC1 through scan electrode SCn. Voltage Vi3 is set at the voltage lower than the discharge start voltage with respect to sustain electrode SU1 through sustain electrode SUn, and voltage Vi4 is set at the voltage exceeding the discharge start voltage.

While the ramp waveform voltage is applied to scan electrode SC1 through scan electrode SCn, feeble initializing discharge occurs between scan electrode SC1 through scan electrode SCn and sustain electrode SU1 through sustain electrode SUn, and feeble initializing discharge occurs between scan electrode SC1 through scan electrode SCn and data electrode D1 through data electrode Dm. Then, the negative-polarity wall voltage accumulated on scan electrode SC1 through scan electrode SCn and the positive-polarity wall voltage accumulated on sustain electrode SU1 through sustain electrode SUn are reduced, and the positive-polarity wall voltage accumulated on data electrode D1 through data electrode Dm is adjusted to a value suitable for address operation in the address period.

Thus, the initializing operation in the initializing period of subfield SF1, namely the forced initializing operation of forcibly causing initializing discharge in all discharge cells, is completed.

In the subsequent address period in subfield SF1, voltage Ve is applied to sustain electrode SU1 through sustain electrode SUn, and voltage Vc is applied to each of scan electrode SC1 through scan electrode SCn.

Next, a negative-polarity scan pulse of negative-polarity voltage Va is applied to scan electrode SC1 in the first row for firstly performing an address operation. Then, an address pulse of positive-polarity voltage Vd is applied to data electrode Dk in the discharge cell to emit light in the first row, of data electrode D1 through data electrode Dm.

The voltage difference in the intersecting part of data electrode Dk and scan electrode SC1 in the discharge cell to which the address pulse of voltage Vd has been applied is derived by adding the difference between the wall voltage on data electrode Dk and that on scan electrode SC1 to the difference (voltage Vd - voltage Va) of the external applied voltage. Thus, the voltage difference between data electrode Dk and scan electrode SC1 exceeds the discharge start voltage, and discharge occurs between data electrode Dk and scan electrode SC1.

Since voltage Ve is applied to sustain electrode SU1 through sustain electrode SUn, the voltage difference between sustain electrode SU1 and scan electrode SC1 is derived by adding the difference between the wall voltage on sustain electrode SU1 and that on scan electrode SC1 to the difference (voltage Ve - voltage Va) of the external applied voltage. At this time, by setting voltage Ve at a voltage value slightly lower than the discharge start voltage, a state where discharge does not occur but is apt to occur can be caused between sustain electrode SU1 and scan electrode SC1.

Therefore, the discharge occurring between data electrode Dk and scan electrode SC1 can cause discharge between sustain electrode SU1 and scan electrode SC1 that exist in a region crossing data electrode Dk. Thus, address discharge occurs in the discharge cell to emit light, positive-polarity wall voltage is accumulated on scan electrode SC1, negative-polarity wall voltage is accumulated on sustain electrode SU1, and negative-polarity wall voltage is also accumulated on data electrode Dk.

Thus, the address operation of causing address discharge in the discharge cell to emit light in the first row and accumulating wall voltage on each electrode is performed. While, the voltage in the part where scan electrode SC1 intersects with data electrode 32 to which no address pulse has been applied does not exceed the discharge start voltage, so that address discharge does not occur.

This address operation is sequentially performed until it reaches the discharge cell in the n-th row in the order of scan electrode SC2, scan electrode SC3, ... , and scan electrode SCn, and the address period in subfield SF1 is completed. Thus, in the address period, address discharge is selectively caused in the discharge cell to emit light, and wall charge is formed in the discharge cell.

In the subsequent sustain period in subfield SF1, voltage 0 (V) is firstly applied to sustain electrode SU1 through sustain electrode SUn, and a sustain pulse of positive-polarity voltage Vs is applied to scan electrode SC1 through scan electrode SCn. In the discharge cell having undergone address discharge, the voltage difference between scan electrode SCi and sustain electrode SUi is obtained by adding the difference between the wall voltage on scan electrode SCi and that on sustain electrode SUi to voltage Vs of the sustain pulse.

Thus, the voltage difference between scan electrode SCi and sustain electrode SUi exceeds the discharge start voltage, and sustain discharge occurs between scan electrode SCi and sustain electrode SUi. Ultraviolet rays generated by this discharge cause phosphor layer 35 to emit light. By this discharge, negative-polarity wall voltage is accumulated on scan electrode SCi, and positive-polarity wall voltage is accumulated on sustain electrode SUi. Positive-polarity wall voltage is also accumulated on data electrode Dk. In the discharge cell having undergone no address discharge in the address period, sustain discharge does not occur and the wall voltage at the end of the initializing period is kept.

Subsequently, voltage 0 (V) is applied to scan electrode SC1 through scan electrode SCn, and a sustain pulse of voltage Vs is applied to sustain electrode SU1 through sustain electrode SUn. In the discharge cell having undergone the sustain discharge, the voltage difference between sustain electrode SUi and scan electrode SCi exceeds the discharge start voltage. Thus, sustain discharge occurs between sustain electrode SUi and scan electrode SCi again, negative-polarity wall voltage is accumulated on sustain electrode SUi, and positive-polarity wall voltage is accumulated on scan electrode SCi.

Hereinafter, similarly, as many sustain pulses as the number derived by multiplying the luminance weight by a predetermined luminance magnification are alternately applied to scan electrode SC1 through scan electrode SCn and sustain electrode SU1 through sustain electrode SUn. Thus, by applying the potential difference between the electrodes of display electrode pair 24, sustain discharge is continuously performed in the discharge cell having undergone the address discharge in the address period.

After generation of a sustain pulse in the sustain period (end of the sustain period), in the state where voltage 0 (V) is applied to sustain electrode SU1 through sustain electrode SUn and data electrode D1 through data electrode Dm, ramp waveform voltage, which gently increases from voltage 0 (V) as base potential to voltage Vr, is applied to scan electrode SC1 through scan electrode SCn.

While the ramp waveform voltage applied to scan electrode SC1 through scan electrode SCn increases beyond the discharge start voltage, feeble discharge continuously occurs in the discharge cell having undergone sustain discharge. Charged particles generated by the feeble discharge are accumulated as wall charge on sustain electrode SUi and scan electrode SCi so as to reduce the voltage difference between sustain electrode SUi and scan electrode SCi. Therefore, the wall voltages on scan electrode SCi and sustain electrode SUi are reduced while the positive-polarity wall voltage is left on data electrode Dk.

When the voltage applied to scan electrode SC1 through scan electrode SCn arrives at voltage Vr, the applied voltage to scan electrode SC1 through scan electrode SCn is decreased to voltage 0 (V). Thus, the sustain operation in the sustain period in subfield SF1 is completed.

Thus, the driving operation of subfield SF1 is completed.

In the initializing period of subfield SF2, the selective initializing operation of applying, to each electrode, the driving voltage waveform where the first half of the initializing period of subfield SF1 is omitted is performed. In the initializing period of subfield SF2, voltage Ve is applied to sustain electrode SU1 through sustain electrode SUn, and voltage 0 (V) is applied to data electrode D1 through data electrode Dm. Ramp waveform voltage, which gently decreases from voltage (e.g. voltage 0 (V)) lower than the discharge start voltage to negative-polarity voltage Vi4 exceeding the discharge start voltage, is applied to scan electrode SC1 through scan electrode SCn.

Feeble initializing discharge occurs in the discharge cell having undergone the sustain discharge in the sustain period of the immediately preceding subfield (subfield SF1 in Fig. 4). Then, the wall voltages on scan electrode SCi and sustain electrode SUi are reduced. Since sufficient positive-polarity wall voltage is accumulated on data electrode Dk by sustain discharge occurring in the immediately preceding sustain period, the excessive part of this wall voltage is discharged, and the wall voltage on data electrode Dk is adjusted to the wall voltage suitable for the address operation.

In the discharge cell having undergone no sustain discharge in the sustain period of the immediately preceding subfield (subfield SF1 in Fig. 4), initializing discharge does not occur, and the wall voltage at the end of the initializing period of the immediately preceding subfield is kept as it is.

The initializing operation in subfield SF2 thus becomes the selective initializing operation of selectively causing initializing discharge in the discharge cell that has undergone address operation in the address period of the immediately preceding subfield, namely in the discharge cell that has undergone sustain discharge in the sustain period of the immediately preceding subfield.

In the address period of subfield SF2, the address operation is performed where a driving voltage waveform similar to that in the address period of subfield SF1 is applied to each electrode, and wall voltage is accumulated on each electrode of the discharge cell to emit light.

In the subsequent sustain period, similarly to the sustain period of subfield SF1, as many sustain pulses as the number corresponding to the luminance weight are alternately applied to scan electrode SC1 through scan electrode SCn and sustain electrode SU1 through sustain electrode SUn, and sustain discharge is caused in the discharge cell that has undergone address discharge in the address period.

In the initializing period and address period of each of subfield SF3 through subfield SF5, a driving voltage waveform similar to that in the initializing period and address period of subfield SF2 is applied to each electrode. In the sustain period of each of subfield SF3 through subfield SF5, a driving voltage waveform similar to that in subfield SF2 is applied to each electrode except for the number of sustain pulses generated in the sustain period.

The driving voltage waveform applied to each electrode of panel 10 of the present exemplary embodiment has been described schematically.

In the present exemplary embodiment, the voltage values are set as follows: voltage Vi1 is 145 (V), voltage Vi2 is 335 (V), voltage Vi3 is 190 (V), voltage Vi4 is -160 (V), voltage Va is -180 (V), voltage Vc is -35 (V), voltage Vs is 190 (V), voltage Vr is 190 (V), voltage Ve is 130 (V), and voltage Vd is 60 (V).

The gradient of the up-ramp waveform voltage applied to scan electrode SC1 through scan electrode SCn in the initializing period of subfield SF1 is set at 1.5 (V/µsec), and the gradient of the down-ramp waveform voltage applied to them is set at -2.5 (V/µsec). The gradient of the down-ramp waveform voltage applied to scan electrode SC1 through scan electrode SCn in the initializing period of subfield SF2 through subfield SF5 is set at -2.5 (V/µsec). The gradient of the ramp waveform voltage that increases from voltage 0 (V) to voltage Vr after generation of the sustain pulse in the sustain period (at the end of the sustain period) is set at 10 (V/µsec).

The specific numerical values of the voltage values and gradients are simply one example, and the voltage values and gradients of the present invention are not limited to the above-mentioned numerical values. Preferably, the voltage values and gradients are set at optimal values based on the discharge characteristics of the panel and the specification of the plasma display apparatus.

Next, shutter glasses 50 of plasma display apparatus 100 of the present exemplary embodiment are described.

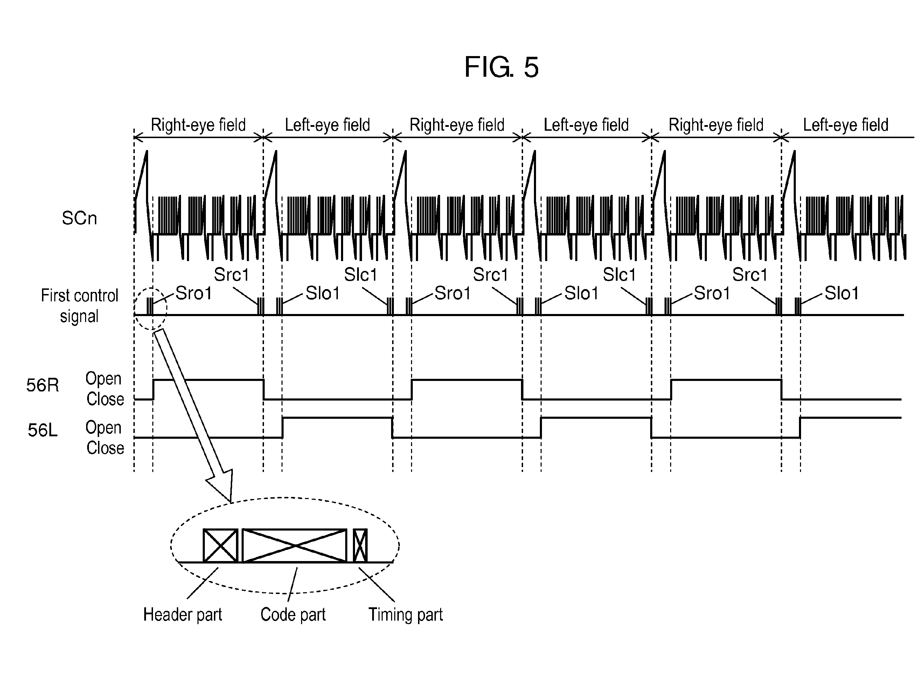

Fig. 5 is a diagram for schematically showing the subfield structure, first control signals, and opening/closing operations of shutter glasses 50 of plasma display apparatus 100 in accordance with the exemplary embodiment of the present invention.

Fig. 5 shows the driving voltage waveform applied to scan electrode SCn for finally performing an address operation in the address period, the first control signals, and the opening/closing operations of right-eye shutter 56R and left-eye shutter 56L. Fig. 5 shows six fields.

In the present exemplary embodiment, in order to display a 3D image on panel 10, the right-eye field and the left-eye field are generated alternately. For example, of the six fields of Fig. 5, the first field, third field, and fifth field are right-eye fields and display a right-eye image signal on panel 10. The second field, fourth field, and sixth field are left-eye fields and display a left-eye image signal on panel 10.

A user who observes a 3D image displayed on panel 10 through shutter glasses 50 recognizes images (right-eye image and left-eye image) displayed in two fields as one 3D image. Therefore, the number of images displayed on panel 10 per second is observed by the user as a half the number of fields displayed per second. For example, when the field frequency (the number of fields generated per second) of the 3D image displayed on the panel is 60 Hz, the user observes 30 3D images per second. Therefore, in order to display 60 3D images per second, the field frequency must be set at 120 Hz, namely twice 60 Hz. In the present exemplary embodiment, the field frequency (the number of fields generated per second) is set to be twice (for example, 120 Hz) the normal frequency so that the user observes 3D moving images smoothly.

Each of the right-eye field and left-eye field has five subfields (subfield SF1, subfield SF2, subfield SF3, subfield SF4, subfield SF5). Subfield SF1 through subfield SF5 have luminance weights of (16, 8, 4, 2, 1).

Thus, one field is constituted by five subfields that have luminance weights in descending order, namely the luminance weights sequentially decrease as subfields are sequentially generated. In other words, the subfield of the largest luminance weight is generated firstly in the field, the subfield of the second-largest luminance weight is generated secondly, the subfield of the third-largest luminance weight is generated thirdly, the subfield of the fourth-largest luminance weight is generated fourthly, and the subfield of the smallest luminance weight is generated finally in the field.

In the present exemplary embodiment, the reason why panel 10 is driven by generating each subfield as discussed above is described below.

Phosphor layer 35 used in panel 10 has afterglow characteristics depending on the material constituting the phosphor. The afterglow means the phenomenon where the phosphor continues the light emission even after the end of discharge. The intensity of the afterglow is proportional to the luminance during the light emission of the phosphors. As the luminance during light emission of the phosphor becomes high, the afterglow becomes strong. There is also a phosphor material having the following characteristics: the afterglow attenuates at a time constant corresponding to the characteristics of the phosphor, and the luminance gradually decreases with the passage of time, but the afterglow continues for several milliseconds even after the completion of sustain discharge. As the luminance during light emission of the phosphor becomes high, the time required for the attenuation becomes long.

The light emission occurring in a subfield of a large luminance weight has a luminance higher than that of the light emission occurring in a subfield of a small luminance weight. Therefore, the afterglow by the light emission occurring in a subfield of a large luminance weight has a luminance higher than that of the afterglow by the light emission occurring in a subfield of a small luminance weight, and the time required for the attenuation is long.

Therefore, when the final subfield of one field is set as the subfield of a large luminance weight, the afterglow leaking to the subsequent field is larger than that when the final subfield is set as the subfield of a small luminance weight.

In plasma display apparatus 100 for displaying a 3D image on panel 10 by alternately generating a right-eye field and a left-eye field, when the afterglow occurring in one field leaks to the subsequent field, a user observes the afterglow as unnecessary light emission related to no image signal. This phenomenon is crosstalk.

Therefore, as the afterglow leaking from one field to the next field increases, the crosstalk degrades, 3D vision of the 3D image is disturbed, and the image display quality in plasma display apparatus 100 reduces. This image display quality means image display quality obtained by a user who views the 3D image through shutter glasses 50.

In order to reduce the afterglow leaking from one field to the next field and reduce the crosstalk, preferably, a subfield of a large luminance weight is generated in an early time of the one field, and strong afterglow is converged in the one field as much as possible.

In other words, the subfield having the largest luminance weight is generated firstly in the field, the luminance weights of the subsequent subfields are sequentially decreased, and the subfield having the smallest luminance weight is generated at the end of the field. Thus, preferably, the leak of the afterglow to the next field is minimized.

In the present exemplary embodiment, in order to suppress the crosstalk, subfield SF1 is set to have the largest luminance weight, and the luminance weights of the subsequent subfields are sequentially decreased.

In the present exemplary embodiment, shutter glasses 50 open and close right-eye shutter 56R and left-eye shutter 56L based on the first control signals.

Timing generation circuit 45 outputs a first control signal (hereinafter referred to as "first right-opening signal Sro1") for opening right-eye shutter 56R synchronously with the start of the address period of subfield SF1 of the right-eye field. Timing generation circuit 45 outputs a first control signal (hereinafter referred to as "first right-closing signal Src1") for closing right-eye shutter 56R synchronously with the start of the left-eye field. Timing generation circuit 45 outputs a first control signal (hereinafter referred to as "first left-opening signal Slo1") for opening left-eye shutter 56L synchronously with the start of the address period of subfield SF1 of the left-eye field. Timing generation circuit 45 outputs a first control signal (hereinafter referred to as "first left-closing signal Slc1") for closing left-eye shutter 56L synchronously with the start of the right-eye field.

Control signal transmitting section 46 converts each of the first control signals (first right-opening signal Sro1, first right-closing signal Src1, first left-opening signal Slo1, and first left-closing signal Slc1) into a serial signal having a header part, a code part, and a timing part, further converts the serial signal into a light signal, and transmits the light signal to shutter glasses 50.

The header part indicates that a series of subsequent serial signals are first control signals. The code part is formed for identifying the first control signals to be first right-opening signal Sro1, first right-closing signal Src1, first left-opening signal Slo1, or first left-closing signal Slc1. The timing part is formed for indicating the timing of performing the control specified by the code part.

The header part and timing part are not necessarily independent, but may be incorporated into the code part in the serial signal.

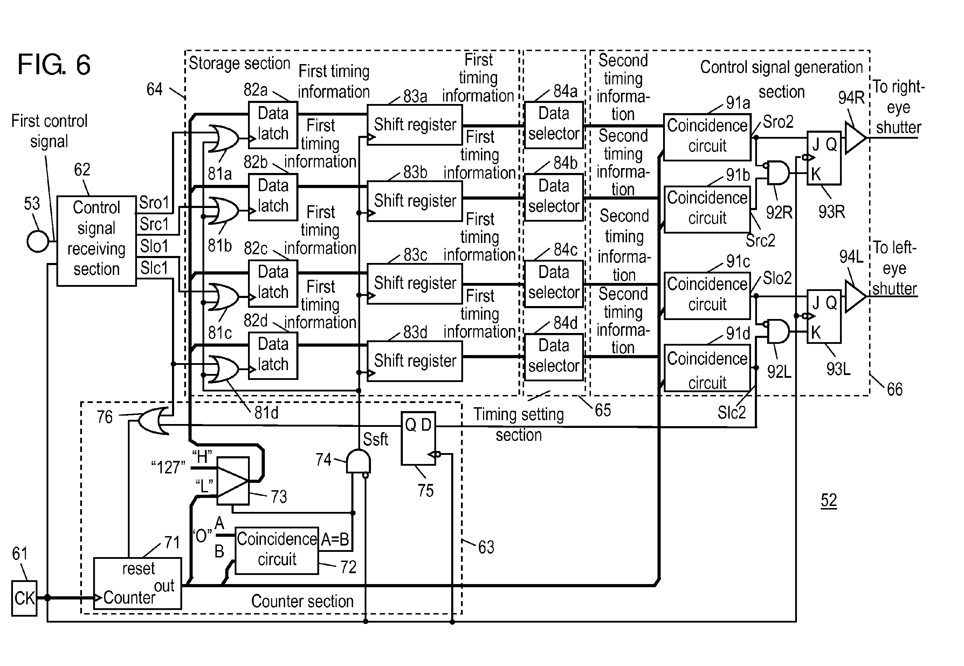

Fig. 6 is a circuit block diagram of shutter control circuit 52 disposed in shutter glasses 50 of plasma display apparatus 100 in accordance with the exemplary embodiment of the present invention.

Shutter control circuit 52 includes clock generation section 61, control signal receiving section 62, counter section 63, storage section 64, timing setting section 65, and control signal generation section 66.

Clock generation section 61 generates a clock signal (hereinafter referred to as "clock CK") for operating shutter control circuit 52 of shutter glasses 50, and supplies the clock signal to each section of shutter control circuit 52.

Light receiving element 53 receives a first control signal that has been transmitted from control signal transmitting section 46 via light emitting element 47 and converted to a light signal, and converts the light signal into an electric serial signal.

Control signal receiving section 62 receives the first control signal that has been received by light receiving element 53 and converted from the light signal into the electric serial signal. Clock CK from clock generation section 61 is input as a synchronous signal into control signal receiving section 62. Control signal receiving section 62 decodes the first control signal to first right-opening signal Sro1, first right-closing signal Src1, first left-opening signal Slo1, or first left-closing signal Slc1, and outputs it.

The serial signal received by light receiving element 53 is transmitted independently of the phase of clock CK of clock generation section 61. In the present exemplary embodiment, control signal receiving section 62 synchronizes each of first right-opening signal Sro1, first right-closing signal Src1, first left-opening signal Slo1, and first left-closing signal Slc1 with clock CK, shapes it to the pulse width of one clock cycle of clock CK, and outputs it.

Counter section 63 includes counter 71, coincidence circuit 72, selector 73, AND gate 74, delay 75, and OR gate 76.

Counter 71 is a counter (up-counter) that receives clock CK from clock generation section 61 as a synchronizing signal and increases a count value synchronously with clock CK, and outputs the count value. Counter 71 receives, as a reset signal, a signal output from OR gate 76, and resets the count value in response to the reset signal.

Counter 71 has a bit length long enough to allow clock CK to be counted for one cycle of the control of right-eye shutter 56R and left-eye shutter 56L. This one cycle means the period after the opening operation of right-eye shutter 56R and left-eye shutter 56L until the next opening operation, and substantially the period corresponding to two fields. For example, when the one cycle of the control is up to 16 msec (corresponding to two fields of a video signal having a field frequency of 120 Hz) and one cycle of clock CK is 1 µsec, the bit length of counter 71 is 14 bits (countable up to 16383).

For simplifying the description, the bit length of counter 71 is set at 7 bits. Therefore, the minimum value of the output of counter 71 is "0", and the maximum value thereof is "127".

Coincidence circuit 72 has two input terminals, and outputs a signal of the "H" level when the signals input to respective input terminals are equal to each other. One input terminal of coincidence circuit 72 receives "0", and the other input terminal receives the output from counter 71. Therefore, coincidence circuit 72 outputs the "H" level when the output of counter 71 becomes minimum value "0"

Selector 73 has two input terminals, and outputs the signal input to one of the input terminals based on a selector signal. One input terminal of selector 73 receives "127" equal to the maximum value of the output of counter 71, and the other input terminal receives the output form counter 71. Selector 73 also receives the output signal from coincidence circuit 72 as the selector signal. Selector 73 selects the output signal from counter 71 when the output signal from coincidence circuit 72 is at the "L" level, selects "127" when the output signal from coincidence circuit 72 is at the "H" level, and outputs the selection result.

AND gate 74 performs the logical product operation of two inputs and one output. In other words, AND gate 74 outputs a signal of the "H" level when both of two input signals are at the "H" level, or outputs a signal of the "L" level when at least one of two input signals is at the "L" level. One input terminal of AND gate 74 receives the output signal from coincidence circuit 72, and the other input terminal receives a signal (inverse signal) obtained by logically inverting clock CK. AND gate 74 outputs a signal of the "H" level when both of the output signal from coincidence circuit 72 and the inverse signal of clock CK are at the "H" level, or outputs a signal of the "L" level when at least one of them is at the "L" level. Hereinafter, the output signal of AND gate 74 is referred to as shift clock Ssft.

Delay 75 is a generally used latch circuit, receives second left-closing signal Slc2 described later, and receives the inverse signal of clock CK as a synchronizing signal. Delay 75 delays second left-closing signal Slc2 by 1/2 cycle of clock CK by latching second left-closing signal Slc2 using the inverse signal of clock CK, and outputs the delayed signal.

OR gate 76 performs the logical add operation of two inputs and one output. In other words, OR gate 76 outputs a signal of the "L" level when both of two input signals are at the "L" level, or outputs a signal of the "H" level when at least one of two input signals is at the "H" level. One input terminal of OR gate 76 receives the output signal from delay 75, and the other input terminal receives first left-closing signal Slc1 output from control signal receiving section 62. Therefore, OR gate 76 outputs a signal of the "L" level when both of second left-closing signal Slc2 that is output from delay 75 and delayed by 1/2 cycle of clock CK and first left-closing signal Slc1 output from control signal receiving section 62 are at the "L" level, or outputs a signal of the "H" level when at least one of them is at the "H" level. Then, the output signal from OR gate 76 is input as a reset signal into counter 71.

Storage section 64 includes OR gate 81a, OR gate 81b, OR gate 81c, OR gate 81d, data latch 82a, data latch 82b, data latch 82c, data latch 82d, shift register 83a, shift register 83b, shift register 83c, and shift register 83d.

OR gate 81a, OR gate 81b, OR gate 81c, and OR gate 81d perform the logical add operation of two inputs and one output similarly to OR gate 76.

One input terminal of OR gate 81a receives shift clock Ssft output from AND gate 74, and the other input terminal receives first right-opening signal Sro1 output from control signal receiving section 62. OR gate 81a outputs the result of the logical add operation of them as a clock signal used in data latch 82a.

One input terminal of OR gate 81b receives shift clock Ssft output from AND gate 74, and the other input terminal receives first right-closing signal Src1 output from control signal receiving section 62. OR gate 81b outputs the result of the logical add operation of them as a clock signal used in data latch 82b.

One input terminal of OR gate 81c receives shift clock Ssft output from AND gate 74, and the other input terminal receives first left-opening signal Slo1 output from control signal receiving section 62. OR gate 81c outputs the result of the logical add operation of them as a clock signal used in data latch 82c.

One input terminal of OR gate 81d receives shift clock Ssft output from AND gate 74, and the other input terminal receives first left-closing signal Slc1 output from control signal receiving section 62. OR gate 81d outputs the result of the logical add operation of them as a clock signal used in data latch 82d.

Data latch 82a, data latch 82b, data latch 82c, and data latch 82d are generally used latch circuits.

Data latch 82a receives a signal (output signal from counter 71 or numerical value "127") output from selector 73, and receives an output signal from OR gate 81a as a synchronizing signal. Data latch 82a latches the signal output from selector 73 using the synchronizing signal output from OR gate 81a, and outputs them as first timing information.

Data latch 82b receives a signal output from selector 73, and receives an output signal from OR gate 81b as a synchronizing signal. Data latch 82b latches the signal output from selector 73 using the synchronizing signal output from OR gate 81b, and outputs them as first timing information.

Data latch 82c receives a signal output from selector 73, and receives an output signal from OR gate 81c as a synchronizing signal. Data latch 82c latches the signal output from selector 73 using the synchronizing signal output from OR gate 81c, and outputs them as first timing information.

Data latch 82d receives a signal output from selector 73, and receives an output signal from OR gate 81d as a synchronizing signal. Data latch 82d latches the signal output from selector 73 using the synchronizing signal output from OR gate 81d, and outputs them as first timing information.

As discussed above, when the output from counter 71 is "0", coincidence circuit 72 outputs a signal of the "H" level. Therefore, selector 73 selects and outputs "127" equal to the maximum value of the output of counter 71, and AND gate 74 outputs shift clock Ssft. When the output from counter 71 is a numerical value other than "0", coincidence circuit 72 outputs a signal of the "L" level. Therefore, selector 73 selects and outputs the output signal from counter 71, and AND gate 74 outputs a signal of the "L" level.

Therefore, when AND gate 74 outputs shift clock Ssft, data latch 82a latches "127" equal to the maximum value of the output of counter 71, and outputs it as first timing information. When AND gate 74 outputs the signal of the "L" level, data latch 82a latches the output signal from counter 71 with a timing when first right-opening signal Sro1 is output from control signal receiving section 62, and outputs it as first timing information.

When AND gate 74 outputs shift clock Ssft, data latch 82b latches "127" equal to the maximum value of the output of counter 71, and outputs it as first timing information. When AND gate 74 outputs the signal of the "L" level, data latch 82b latches the output signal from counter 71 with a timing when first right-closing signal Src1 is output from control signal receiving section 62, and outputs it as first timing information.

When AND gate 74 outputs shift clock Ssft, data latch 82c latches "127" equal to the maximum value of the output of counter 71, and outputs it as first timing information. When AND gate 74 outputs the signal of the "L" level, data latch 82c latches the output signal from counter 71 with a timing when first left-opening signal Slo1 is output from control signal receiving section 62, and outputs it as first timing information.

When AND gate 74 outputs shift clock Ssft, data latch 82d latches "127" equal to the maximum value of the output of counter 71, and outputs it as first timing information. When AND gate 74 outputs the signal of the "L" level, data latch 82d latches the output signal from counter 71 with a timing when first left-closing signal Slc1 is output from control signal receiving section 62, and outputs it as first timing information.

Shift register 83a, shift register 83b, shift register 83c, and shift register 83d are generally used shift register circuits, and are formed by interconnecting a plurality of latch circuits in series (cascade). Synchronously with the input synchronizing signal, each shift register sequentially sends the input signal from one latch circuit to the next latch circuit (shifts it step by step), and outputs it. Therefore, shift register 83a, shift register 83b, shift register 83c, and shift register 83d can delay the input signal by the number of latch circuits constituting each shift resister. At this time, the shift registers store as many input signals as latch circuits constituting the shift resister. For example, when the number of latch circuits constituting each shift resister is 10, each shift resister can output the input signal while delaying it by 10 cycles of the synchronizing signal input to the shift resister. At this time, the shift resister stores 10 input signals.

In the present exemplary embodiment, each of shift register 83a, shift register 83b, shift register 83c, and shift register 83d is constituted by two or more latch circuits. However, each shift register is constituted by eight latch circuits in the following description. Therefore, "plurality" used in first control signals in a plurality of fields received by the shutter glasses means "2" or more.

Shift register 83a, shift register 83b, shift register 83c, and shift register 83d receive, as a synchronizing signal, shift clock Ssft output from AND gate 74.

Shift register 83a receives first timing information output from data latch 82a. Therefore, shift register 83a outputs the signal that is obtained by delaying the first timing information output from data latch 82a by eight cycles of shift clock Ssft.

Shift register 83b receives first timing information output from data latch 82b. Therefore, shift register 83b outputs the signal that is obtained by delaying the first timing information output from data latch 82b by eight cycles of shift clock Ssft.

Shift register 83c receives first timing information output from data latch 82c. Therefore, shift register 83c outputs the signal that is obtained by delaying the first timing information output from data latch 82c by eight cycles of shift clock Ssft.

Shift register 83d receives first timing information output from data latch 82d. Therefore, shift register 83d outputs the signal that is obtained by delaying the first timing information output from data latch 82d by eight cycles of shift clock Ssft.

Timing setting section 65 includes data selector 84a, data selector 84b, data selector 84c, and data selector 84d.

Data selector 84a, data selector 84b, data selector 84c, and data selector 84d include a plurality of storage circuits and a majority circuit. They select the most frequent data segment (mode value), of a plurality of data segments stored in the storage circuits, and output the most frequent data segment. For example, when each data selector has 10 storage circuits, and six "10"s and four "20"s are stored in the respective storage circuits, the data selector selects and outputs "10" (the number of "10"s is larger). When there is a plurality of mode values, the data selector selects and outputs data having the largest value. For example, when each data selector has 10 storage circuits, and five "10"s and five "20"s are stored in the respective storage circuits, the data selector selects and outputs "20" (the numerical value is larger).

In the present exemplary embodiment, each of data selector 84a, data selector 84b, data selector 84c, and data selector 84d includes as many storage circuits as latch circuits included in each of shift register 83a, shift register 83b, shift register 83c, and shift register 83d. For example, when each shift register is constituted by eight latch circuits, each data selector has eight storage circuits, and majority determination is performed using eight data segments stored in the storage circuits. Whenever a new data segment is output from each shift register, each data selector updates data segments stored in the storage circuits sequentially in order of occurrence.

Data selector 84a receives first timing information output from shift register 83a. Data selector 84a stores eight pieces of first timing information output from shift register 83a, selects a mode value of them, and outputs it as second timing information.

Data selector 84b receives first timing information output from shift register 83b. Data selector 84b stores eight pieces of first timing information output from shift register 83b, selects a mode value of them, and outputs it as second timing information.

Data selector 84c receives first timing information output from shift register 83c. Data selector 84c stores eight pieces of first timing information output from shift register 83c, selects a mode value of them, and outputs it as second timing information.

Data selector 84d receives first timing information output from shift register 83d. Data selector 84d stores eight pieces of first timing information output from shift register 83d, selects a mode value of them, and outputs it as second timing information.

Control signal generation section 66 includes coincidence circuit 91a, coincidence circuit 91b, coincidence circuit 91c, coincidence circuit 91d, AND gate 92R, AND gate 92L, JK flip flop 93R, JK flip flop 93L, amplifier 94R, and amplifier 94L.

Coincidence circuit 91a, coincidence circuit 91b, coincidence circuit 91c, and coincidence circuit 91d have two input terminals, and output a signal of the "H" level when signals input to respective input terminals are equal to each other.

One input terminal of coincidence circuit 91a receives second timing information output from data selector 84a, and the other input terminal receives the output from counter 71. When the output from counter 71 becomes equal to the second timing information output from data selector 84a, coincidence circuit 91a outputs a signal of the "H" level. The signal output from coincidence circuit 91a is a second control signal (hereinafter referred to as "second right-opening signal Sro2") for opening right-eye shutter 56R.

One input terminal of coincidence circuit 91b receives second timing information output from data selector 84b, and the other input terminal receives the output from counter 71. When the output from counter 71 becomes equal to the second timing information output from data selector 84b, coincidence circuit 91b outputs a signal of the "H" level. The signal output from coincidence circuit 91b is a second control signal (hereinafter referred to as "second right-closing signal Src2") for closing right-eye shutter 56R.

One input terminal of coincidence circuit 91c receives second timing information output from data selector 84c, and the other input terminal receives the output from counter 71. When the output from counter 71 becomes equal to the second timing information output from data selector 84c, coincidence circuit 91c outputs a signal of the "H" level. The signal output from coincidence circuit 91c is a second control signal (hereinafter referred to as "second left-opening signal Slo2") for opening left-eye shutter 56L.

One input terminal of coincidence circuit 91d receives second timing information output from data selector 84d, and the other input terminal receives the output from counter 71. When the output from counter 71 becomes equal to the second timing information output from data selector 84d, coincidence circuit 91d outputs a signal of the "H" level. The signal output from coincidence circuit 91d is a second control signal (hereinafter referred to as "second left-closing signal Slc2") for closing left-eye shutter 56L.

AND gate 92R and AND gate 92L perform the logical product operation of two inputs and one output similarly to AND gate 74.

One input terminal of AND gate 92R receives a signal obtained by logically inverting second right-opening signal Sro2, and the other input terminal receives second right-closing signal Src2. Therefore, AND gate 92R outputs a signal of the "H" level when second right-opening signal Sro2 is at the "L" level and second right-closing signal Src2 is at the "H" level, or outputs a signal of the "L" level otherwise. AND gate 92R is a circuit disposed for putting a higher priority on second right-opening signal Sro2.

One input terminal of AND gate 92L receives a signal obtained by logically inverting second left-opening signal Slo2, and the other input terminal receives second left-closing signal Slc2. Therefore, AND gate 92L outputs a signal of the "H" level when second left-opening signal Slo2 is at the "L" level and second left-closing signal Slc2 is at the "H" level, or outputs a signal of the "L" level otherwise. AND gate 92L is a circuit disposed for putting a higher priority on second left-opening signal Slo2.

JK flip flop 93R and JK flip flop 93L are generally used JK flip flop circuits. In other words, the output signal is at the "L" level when a signal of the "L" level is input to input terminal J and a signal of the "H" level is input to input terminal K. The output signal is at the "H" level when a signal of the "H" level is input to input terminal J and a signal of the "L" level is input to input terminal K. The output signal is kept in the preceding state when a signal of the "L" level is input to each of input terminal J and input terminal K. The output signal is a signal obtained by logically inverting the preceding state when a signal of the "H" level is input to each of input terminal J and input terminal K.

Input terminal J of JK flip flop 93R receives second right-opening signal Sro2 output from coincidence circuit 91a, and input terminal K receives the output signal from AND gate 92R. Therefore, JK flip flop 93R outputs a signal of the "H" level when second right-opening signal Sro2 is at the "H" level. JK flip flop 93R outputs a signal of the "L" level when the output signal from AND gate 92R is at the "H" level, namely when second right-closing signal Src2 is at the "H" level and second right-opening signal Sro2 is at the "L" level. JK flip flop 93R does not change the output signal when second right-opening signal Sro2 is at the "L" level and second right-closing signal Src2 is at the "L" level.

Input terminal J of JK flip flop 93L receives second left-opening signal Slo2 output from coincidence circuit 91c, and input terminal K receives the output signal from AND gate 92L. Therefore, JK flip flop 93L outputs a signal of the "H" level when second left-opening signal Slo2 is at the "H" level. JK flip flop 93L outputs a signal of the "L" level when the output signal from AND gate 92L is at the "H" level, namely when second left-closing signal Slc2 is at the "H" level and second left-opening signal Slo2 is at the "L" level. JK flip flop 93L does not change the output signal when second left-opening signal Slo2 is at the "L" level and second left-closing signal Slc2 is at the "L" level.

A signal (inverse signal) obtained by logically inverting clock CK is input as a synchronizing signal into JK flip flop 93R and JK flip flop 93L. Therefore, the output of each of JK flip flop 93R and JK flip flop 93L is a signal delayed by 1/2 cycle of clock CK.

Amplifier 94R and amplifier 94L are voltage amplifiers, and generate voltage required for controlling shutters of shutter glasses 50. In the present exemplary embodiment, right-eye shutter 56R and left-eye shutter 56L included in shutter glasses 50 are liquid crystal shutters of normally white (visible light is transmitted when voltage for control is not applied). Therefore, right-eye shutter 56R and left-eye shutter 56L come into a blocking state of visible light when voltage VCL (e.g. 30 (V)) for control is applied, or come into a transmitting state of visible light when no voltage VCL (e.g. 0 (V)) for control is applied.

Amplifier 94R amplifies the output from JK flip flop 93R to voltage VCL required for driving right-eye shutter 56R. Since right-eye shutter 56R is a liquid crystal shutter of normally white as discussed above, amplifier 94R outputs voltage 0 (V) when the output of JK flip flop 93R is at the "H" level, or outputs voltage VCL to close right-eye shutter 56R when the output of JK flip flop 93R is at the "L" level.

Amplifier 94L amplifies the output from JK flip flop 93L to voltage VCL required for driving left-eye shutter 56L. Since left-eye shutter 56L is a liquid crystal shutter of normally white as discussed above, amplifier 94L outputs voltage 0 (V) when the output of JK flip flop 93L is at the "H" level, or outputs voltage VCL to close left-eye shutter 56L when the output of JK flip flop 93L is at the "L" level.

Thus, shutter control circuit 52 includes the following elements:
clock generation section 61;
counter section 63 that increases the count value based on clock CK generated by clock generation section 61 and is reset with a received first control signal;
storage section 64 for storing the output signals supplied from counter section 63 when counter section 63 receives first control signals, as first timing information for a plurality of fields;
timing setting section 65 for setting second timing information based on the first timing information for the plurality of fields stored in storage section 64; and
control signal generation section 66 for comparing the second timing information set by timing setting section 65 with the output from counter 71 and generating second control signals.

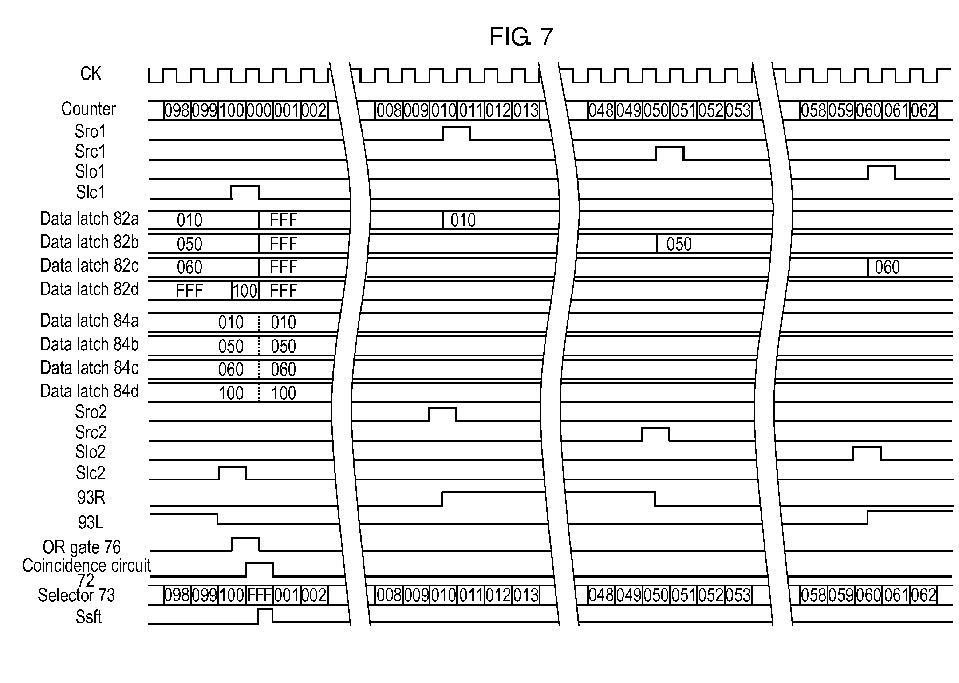

Fig. 7 is a timing chart for showing an operation of shutter glasses 50 of plasma display apparatus 100 in accordance with the exemplary embodiment of the present invention. Fig. 7 shows an output signal of each circuit block of shutter control circuit 52, and shows a timing chart when shutter glasses 50 normally operate synchronously with the first control signal transmitted from control signal transmitting section 46.

When counter 71 normally operates synchronously with the first control signal transmitted from control signal transmitting section 46, the output of counter 71 is assumed as below. When control signal receiving section 62 outputs first right-opening signal Sro1, the output of counter 71 is "10". When control signal receiving section 62 outputs first right-closing signal Src1, the output of counter 71 is "50". When control signal receiving section 62 outputs first left-opening signal Slo1, the output of counter 71 is "60". When control signal receiving section 62 outputs first left-closing signal Slc1, the output of counter 71 is "100".

As discussed above, when counter 71 normally operates synchronously with the first control signal transmitted from control signal transmitting section 46, control signal receiving section 62 outputs first left-closing signal Slc1 when the output of counter 71 is "100".

First left-closing signal Slc1 is input to OR gate 76, so that first left-closing signal Slc1 is input as a reset signal from OR gate 76 to counter 71. Thus, counter 71 is reset synchronously with clock CK, and the output signal of counter 71 becomes "0".

When counter 71 outputs "0", coincidence circuit 72 outputs a signal of the "H" level. Thus, the output signal of selector 73 is switched from the output signal of counter 71 to "127". Simultaneously, AND gate 74 outputs shift clock Ssft synchronously with the inverse signal of clock CK.

When shift clock Ssft is output from AND gate 74, shift register 83a captures an output signal from data latch 82a as new first timing information. When counter 71 normally operates synchronously with the first control signal transmitted from control signal transmitting section 46, the output signal from data latch 82a is "10". Shift register 83a therefore captures "10" as new first timing information. Simultaneously, shift register 83a shifts the first timing information accumulated inside shift register 83a step by step (data is sent sequentially from one latch circuit to the next latch circuit). When counter 71 normally operates synchronously with the first control signal, all pieces of first timing information accumulated inside shift register 83a are "10". Therefore, "10" is output from shift register 83a.

Similarly, when shift clock Ssft is output from AND gate 74, shift register 83b captures an output signal from data latch 82b as new first timing information. When counter 71 normally operates synchronously with the first control signal transmitted from control signal transmitting section 46, the output signal from data latch 82b is "50". Shift register 83b therefore captures "50" as new first timing information. Simultaneously, shift register 83b shifts the first timing information accumulated inside shift register 83b step by step (data is sent sequentially from one latch circuit to the next latch circuit). When counter 71 normally operates synchronously with the first control signal, all pieces of first timing information accumulated inside shift register 83b are "50". Therefore, "50" is output from shift register 83b.

Similarly, when shift clock Ssft is output from AND gate 74, shift register 83c captures an output signal from data latch 82c as new first timing information. When counter 71 normally operates synchronously with the first control signal transmitted from control signal transmitting section 46, the output signal from data latch 82c is "60". Shift register 83c therefore captures "60" as new first timing information. Simultaneously, shift register 83c shifts the first timing information accumulated inside shift register 83c step by step (data is sent sequentially from one latch circuit to the next latch circuit). When counter 71 normally operates synchronously with the first control signal, all pieces of first timing information accumulated inside shift register 83c are "60". Therefore, "60" is output from shift register 83c.

Similarly, when shift clock Ssft is output from AND gate 74, shift register 83d captures an output signal from data latch 82d as new first timing information. When counter 71 normally operates synchronously with the first control signal transmitted from control signal transmitting section 46, the output signal from data latch 82d is "100". Shift register 83d therefore captures "100" as new first timing information. Simultaneously, shift register 83d shifts the first timing information accumulated inside shift register 83d step by step (data is sent sequentially from one latch circuit to the next latch circuit). When counter 71 normally operates synchronously with the first control signal, all pieces of first timing information accumulated inside shift register 83d are "100". Therefore, "100" is output from shift register 83d.

Thus, when counter 71 normally operates synchronously with the first control signal transmitted from control signal transmitting section 46, the signal output from shift register 83a is always "10", the signal output from shift register 83b is always "50", the signal output from shift register 83c is always "60", and the signal output from shift register 83d is always "100".

Therefore, "10" is always captured by data selector 84a, and the numerical value selected by majority determination in data selector 84a is "10". As a result, data selector 84a outputs "10" as second timing information.

Similarly, "50" is always captured by data selector 84b, and the numerical value selected by majority determination in data selector 84b is "50". As a result, data selector 84b outputs "50" as second timing information.

Similarly, "60" is always captured by data selector 84c, and the numerical value selected by majority determination in data selector 84c is "60". As a result, data selector 84c outputs "60" as second timing information.

Similarly, "100" is always captured by data selector 84d, and the numerical value selected by majority determination in data selector 84d is "100". As a result, data selector 84d outputs "100" as second timing information.

Shift clock Ssft output from AND gate 74 is input as a synchronizing signal to data latch 82a via OR gate 81a, so that data latch 82a captures (latches) an output signal from selector 73 as a new input signal when shift clock Ssft is output from AND gate 74. At this time, selector 73 outputs "127", so that the signal latched by data latch 82a becomes "127" and the output signal of data latch 82a is temporarily switched from "10" to "127".

Each numerical value of Fig. 7 is expressed by a decimal number. This "127" is equal to the maximum value in counter 71, so that the "127" is expressed by "FFF" indicating the maximum value in counter 71 in Fig. 7.

Shift clock Ssft output from AND gate 74 is input as a synchronizing signal to data latch 82b via OR gate 81b, is input as a synchronizing signal to data latch 82c via OR gate 81c, and is input as a synchronizing signal to data latch 82d via OR gate 81d. Therefore, when shift clock Ssft is output from AND gate 74, data latch 82b, data latch 82c, and data latch 82d latch "127" output from selector 73 as a new input signal.

When counter 71 normally operates synchronously with the first control signal transmitted from control signal transmitting section 46, the output signal from data latch 82b is "50", the output signal from data latch 82c is "60", the output signal from data latch 82d is "100". With the timing when shift clock Ssft is output from AND gate 74, the output signal of data latch 82b is temporarily switched from "50" to "127 (FFF in Fig. 7)", the output signal of data latch 82c is temporarily switched from "60" to "127 (FFF in Fig. 7)", and the output signal of data latch 82d is temporarily switched from "100" to "127 (FFF in Fig. 7)",

Counter 71 is reset with first left-closing signal Slc1, so that the output signal of counter 71 increases from "0" in steps of "1" synchronously with clock CK. Thus, the output signal of coincidence circuit 72 comes into the "L" level, the output signal of AND gate 74 comes into the "L" level, and the output signal of selector 73 is switched from "127" to the output signal from counter 71.

When counter 71 normally operates synchronously with the first control signal transmitted from control signal transmitting section 46, control signal receiving section 62 outputs first right-opening signal Sro1 when the output signal of counter 71 is "10". First right-opening signal Sro1 output from control signal receiving section 62 is input as a synchronizing signal into data latch 82a via OR gate 81a. Therefore, data latch 82a latches output signal "10" from counter 71, which is the output signal from selector 73, as new first timing information. Thus, the output signal of data latch 82a is switched from "127 (FFF in Fig. 7)" to "10".

Coincidence circuit 91a compares the second timing information output from data selector 84a with the output signal from counter 71. As discussed above, when counter 71 normally operates synchronously with the first control signal transmitted from control signal transmitting section 46, the second timing information output from data selector 84a is "10". Therefore, when the output signal of counter 71 is "10", a signal of the "H" level is output from coincidence circuit 91a.

This signal is input as second right-opening signal Sro2 into input terminal J of JK flip flop 93R, so that the output signal from JK flip flop 93R comes into the "H" level when the output signal from coincidence circuit 91a comes into the "H" level. Thus, the voltage of the output signal from amplifier 94R becomes 0 (V), and right-eye shutter 56R changes from the blocking state of visible light to the transmitting state of visible light.

Next, when counter 71 normally operates synchronously with the first control signal transmitted from control signal transmitting section 46, control signal receiving section 62 outputs first right-closing signal Src1 when the output signal of counter 71 is "50". First right-closing signal Src1 output from control signal receiving section 62 is input as a synchronizing signal into data latch 82b via OR gate 81b. Therefore, data latch 82b latches output signal "50" from counter 71, which is the output signal from selector 73, as new first timing information. Thus, the output signal of data latch 82b is switched from "127 (FFF in Fig. 7)" to "50".

Coincidence circuit 91b compares the second timing information output from data selector 84b with the output signal from counter 71. As discussed above, when counter 71 normally operates synchronously with the first control signal transmitted from control signal transmitting section 46, the second timing information output from data selector 84b is "50". Therefore, when the output signal of counter 71 is "50", a signal of the "H" level is output from coincidence circuit 91b.

This signal is input as second right-closing signal Src2 into input terminal K of JK flip flop 93R via AND gate 92R, so that the output signal from JK flip flop 93R comes into the "L" level when the output signal from coincidence circuit 91b comes into the "H" level. Thus, the voltage of the output signal from amplifier 94R becomes voltage VCL (e.g. 30 (V)), and right-eye shutter 56R changes from the transmitting state of visible light to the blocking state of visible light.

Next, when counter 71 normally operates synchronously with the first control signal transmitted from control signal transmitting section 46, control signal receiving section 62 outputs first left-opening signal Slo1 when the output signal of counter 71 is "60". First left-opening signal Slo1 output from control signal receiving section 62 is input as a synchronizing signal into data latch 82c via OR gate 81c. Therefore, data latch 82c latches output signal "60" from counter 71, which is the output signal from selector 73, as new first timing information. Thus, the output signal of data latch 82c is switched from "127 (FFF in Fig. 7)" to "60".

Coincidence circuit 91c compares the second timing information output from data selector 84c with the output signal from counter 71. As discussed above, when counter 71 normally operates synchronously with the first control signal transmitted from control signal transmitting section 46, the second timing information output from data selector 84c is "60". Therefore, when the output signal of counter 71 is "60", a signal of the "H" level is output from coincidence circuit 91c.

This signal is input as second left-opening signal Slo2 into input terminal J of JK flip flop 93L, so that the output signal from JK flip flop 93L comes into the "H" level when the output signal from coincidence circuit 91c comes into the "H" level. Thus, the voltage of the output signal from amplifier 94L becomes 0 (V), and left-eye shutter 56L changes from the blocking state of visible light to the transmitting state of visible light.

Next, when counter 71 normally operates synchronously with the first control signal transmitted from control signal transmitting section 46, control signal receiving section 62 outputs first left-closing signal Slc1 when the output signal of counter 71 is "100". First left-closing signal Slc1 output from control signal receiving section 62 is input as a synchronizing signal into data latch 82d via OR gate 81d. Therefore, data latch 82d latches output signal "100" from counter 71, which is the output signal from selector 73, as new first timing information. Thus, the output signal of data latch 82d is switched from "127 (FFF in Fig. 7)" to "100".

Coincidence circuit 91d compares the second timing information output from data selector 84d with the output signal of counter 71. As discussed above, when counter 71 normally operates synchronously with the first control signal transmitted from control signal transmitting section 46, the second timing information output from data selector 84d is "100". Therefore, when the output signal of counter 71 is "100", a signal of the "H" level is output from coincidence circuit 91d.

This signal is input as second left-closing signal Slc2 into input terminal K of JK flip flop 93L via AND gate 92L, so that the output signal from JK flip flop 93L comes into the "L" level when the output signal from coincidence circuit 91d comes into the "H" level. Thus, the voltage of the output signal from amplifier 94L becomes voltage VCL (e.g. 30 (V)), and left-eye shutter 56L changes from the transmitting state of visible light to the blocking state of visible light.

Second left-closing signal Slc2 output from coincidence circuit 91d is input as a reset signal to counter 71 via delay 75 and OR gate 76. Therefore, counter 71 is reset in response to second left-closing signal Slc2, and the output signal of counter 71 becomes "0" again.

When counter 71 normally operates synchronously with the first control signal transmitted from control signal transmitting section 46, first left-closing signal Slc1 and second left-closing signal Slc2 occur substantially with the same timing.

When counter 71 is reset, shutter control circuit 52 repeats the above-mentioned operations. By repeating these operations, shutter control circuit 52 controls the transmitting state of visible light and the blocking state of visible light of right-eye shutter 56R and left-eye shutter 56L.

In shutter control circuit 52, even if a light signal that is transmitted from light emitting element 47 and received by light receiving element 53 is temporarily blocked by a blocking object or the like, and the first control signal that is transmitted from control signal transmitting section 46 and is to be received by control signal receiving section 62 is temporarily missed, second timing information output from data selector 84a through data selector 84d does not change as long as the majority determination result does not change in data selector 84a through data selector 84d. When the second timing information output from data selector 84a through data selector 84d is correct, coincidence circuit 91a through coincidence circuit 91d output second control signals with the correct timings.

Therefore, in shutter control circuit 52, even if the first control signal to be received by control signal receiving section 62 is temporarily missed, coincidence circuit 91a through coincidence circuit 91d output the second control signals with the correct timings, and right-eye shutter 56R and left-eye shutter 56L can be controlled normally until the second timing information output from data selector 84a through data selector 84d changes. Therefore, even if the light signal that is transmitted from light emitting element 47 and received by light receiving element 53 is temporarily blocked by a blocking object or the like, a user can normally 3D-view a 3D image displayed on panel 10.

In the present exemplary embodiment, each of shift register 83a, shift register 83b, shift register 83c, and shift register 83d of storage section 64 is formed of eight latch circuits, and stores eight pieces of first timing information. The period in which the eight pieces of first timing information are stored corresponds to 12 fields. In this configuration in shutter control circuit 52, therefore, when the first control signal to be received by control signal receiving section 62 is missed for a period of 10 fields or longer, all of the signals output from data latch 82a, data latch 82b, data latch 82c, and data latch 82d become "127", and a half or more than half of the information stored in each of shift register 83a, shift register 83b, shift register 83c, and shift register 83d become "127".

Thus, all of the majority determination results output from data selector 84a, data selector 84b, data selector 84c, and data selector 84d become "127", and all pieces of second timing information output from data selector 84a, data selector 84b, data selector 84c, and data selector 84d become "127". In this case, when the output signal of counter 71 becomes "127", all of the output signals of coincidence circuit 91a, coincidence circuit 91b, coincidence circuit 91c, and coincidence circuit 91d come into the "H" level. Both outputs of JK flip flop 93R and JK flip flop 93L come into the "H" level. As s result, the voltages of output signals of amplifier 94R and amplifier 94L become 0 (V), and both right-eye shutter 56R and left-eye shutter 56L come into a transmitting state of visible light.

Then, counter 71 is reset in response to the output signal from coincidence circuit 91d, the output signal becomes "0" again, and the numerical value is increased from "0" in steps of "1" synchronously with clock CK. Thus, all of the output signals of coincidence circuit 91a, coincidence circuit 91b, coincidence circuit 91c, and coincidence circuit 91d come into the "L" level. Both outputs of JK flip flop 93R and JK flip flop 93L are therefore kept as they are, namely at the "H" level. As a result, the voltages of output signals of amplifier 94R and amplifier 94L are kept to be 0 (V), and both right-eye shutter 56R and left-eye shutter 56L are kept in the transmitting state of visible light.

In shutter control circuit 52, thus, when the first control signal to be received by control signal receiving section 62 is missed for a long time (until all of the majority determination results of data selector 84a, data selector 84b, data selector 84c, and data selector 84d are "127"), both right-eye shutter 56R and left-eye shutter 56L are kept in the transmitting state of visible light. Therefore, shutter glasses 50 can prevent that the operation stops in a state where one shutter is closed or the operation stops in a state where both shutters are closed, and hence can prevent that the field of view of one eye or both eyes of the user is kept to be blocked.

As discussed above, shutter glasses 50 of the present exemplary embodiment include shutter control circuit 52 for storing first timing information for a plurality of fields based on the received first control signals for the plurality of fields and for generating second control signals based on the stored first timing information for the plurality of fields. Shutter glasses 50 control the transmission and blocking of visible light in right-eye shutter 56R and left-eye shutter 56L using the second control signals.

Thus, in shutter glasses 50, even if the first control signal to be received is temporarily missed, right-eye shutter 56R and left-eye shutter 56L can be controlled normally. Therefore, even if the light signal for controlling the shutter glasses that is transmitted from image display apparatus 100 and received by shutter glasses 50 is temporarily blocked by a blocking object or the like, a user who views a 3D image displayed on panel 10 through shutter glasses 50 can normally 3D-view the 3D image displayed on panel 10.

Shutter glasses 50 can prevent that, when the first control signal to be received is missed, the operation stops in a state where one shutter is closed or the operation stops in a state where both shutters are closed, and hence can prevent that the field of view of one eye or both eyes of the user is kept to be blocked.

In the present exemplary embodiment, clock generation section 61 built in shutter glasses 50 generates clock CK, which is a synchronizing signal required for operating each circuit in shutter control circuit 52. Therefore, even if the first control signal to be received is missed, shutter glasses 50 can stably generate clock CK and can stably operate each circuit in shutter control circuit 52.

In the description of the present exemplary embodiment, each of shift register 83a, shift register 83b, shift register 83c, and shift register 83d of storage section 64 is formed of eight latch circuits, and stores eight pieces of first timing information. However, the present invention is not limited to this configuration. In shutter control circuit 52, by increasing the number of latch circuits constituting each shift register, the period can be extended in which right-eye shutter 56R and left-eye shutter 56L can be controlled normally even if the first control signal to be received by control signal receiving section 62 is missed. Alternatively, in shutter control circuit 52, by decreasing the number of latch circuits constituting each shift register, the period can be shortened that is required after the first control signal to be received by control signal receiving section 62 is blocked until both right-eye shutter 56R and left-eye shutter 56L are opened.

In the present exemplary embodiment, counter 71 is described as a counter (up counter) for increasing the count value synchronously with clock CK of clock generation section 61. However, counter 71 may be a counter (down counter) for decreasing the count value synchronously with clock CK of clock generation section 61. In that case, each set value of shutter control circuit 52 is required to be set again in response to the down counter.

In the present exemplary embodiment, the example where one field is constituted by five subfields has been described. The number of subfields constituting one field of the present invention is not limited to the above-mentioned value. For example, when the number of subfields is set to be larger than five, the number of gradations displayable on panel 10 can be increased.

In the present exemplary embodiment, the example has been described where the luminance weights of the subfields are set at powers of "2", and the luminance weights of subfield SF1 through subfield SF5 are set at (16, 8, 4, 2, 1). However, the luminance weights set for the subfields are not limited to these numerical values. When the combination of the subfields for determining the gradation is made flexible, for example, the luminance weights are set at (12, 7, 3, 2, 1) or the like, the coding for suppressing occurrence of the moving image false contour is allowed. The number of subfields constituting one field and the luminance weights of the subfields are set appropriately in response to the characteristics of panel 10 and the specification of plasma display apparatus 100.

Each circuit block shown in the exemplary embodiment of the present invention may be configured as an electric circuit for performing each operation shown in the exemplary embodiment, or may be configured using a microcomputer or the like programmed so as to perform a similar operation.

In the present embodiment, an example where one pixel is formed of discharge cells of three colors R, G, and B has been described. However, also in a panel where one pixel is formed of discharge cells of four or more colors, the configuration shown in the present embodiment can be applied and a similar effect can be produced.

The above-mentioned driver circuits are one example, and the configurations of them are not limited to the above-mentioned configurations.

Each specific numerical value shown in the exemplary embodiment of the present invention is set based on the characteristics of panel 10 having a screen size of 50 inches and having 1024 display electrode pairs 24, and is simply one example in the embodiment. The present invention is not limited to these numerical values. Numerical values are preferably set optimally in response to the characteristics of the panel or the specification of the plasma display apparatus. These numerical values can vary in a range allowing the above-mentioned effect. The number of subfields and the luminance weight of each subfield are not limited to the values shown in the exemplary embodiment of the present invention, but the subfield structure may be changed based on an image signal or the like.

### INDUSTRIAL APPLICABILITY

An image display apparatus of the present invention allows that a user uses shutter glasses to 3D-view right-eye images and left-eye images displayed temporally alternately on a display device. Even when a control signal to be received by the shutter glasses is temporarily missed, the user can 3D-view a display image by normal control of a right-eye shutter and left-eye shutter. When the control signal to be received by the shutter glasses is missed, the shutter glasses can prevent the operation from stopping in a state where one or both of the shutters are closed. Therefore, the present invention is useful as an image display apparatus and the shutter glasses.

### REFERENCE MARKS IN THE DRAWINGS

- 10: panel
- 21: front substrate
- 22: scan electrode
- 23: sustain electrode
- 24: display electrode pair
- 25, 33: dielectric layer
- 26: protective layer
- 31: rear substrate
- 32: data electrode
- 34: barrier rib
- 35: phosphor layer
- 41: image signal processing circuit
- 42: data electrode driver circuit
- 43: scan electrode driver circuit
- 44: sustain electrode driver circuit
- 45: timing generation circuit
- 46: control signal transmitting section
- 47: light emitting element
- 50: shutter glasses
- 52: shutter control circuit
- 53: light receiving element
- 56R: right-eye shutter
- 56L: left-eye shutter
- 61: clock generation section
- 62: control signal receiving section
- 63: counter section
- 64: storage section
- 65: timing setting section
- 66: control signal generation section
- 71: counter
- 72, 91a, 91b, 91c, 91d: coincidence circuit
- 73: selector
- 74, 92R, 92L: AND gate
- 75: delay
- 76, 81a, 81b, 81c, 81d: OR gate
- 82a, 82b, 82c, 82d: data latch
- 83a, 83b, 83c, 83d: shift register
- 84a, 84b, 84c, 84d: data selector
- 93R, 93L: JK flip flop
- 94R, 94L: amplifier
- 100: plasma display apparatus

## Claims

1. An image display apparatus comprising:
an image display section for displaying an image by alternately repeating a right-eye field for displaying a right-eye image signal and a left-eye field for displaying a left-eye image signal, and for transmitting first control signals synchronous with the right-eye field and the left-eye field; and
shutter glasses that receive the first control signals and have a right-eye shutter and a left-eye shutter for transmitting and blocking visible light,
wherein the shutter glasses include a shutter control circuit for storing first timing information for a plurality of fields based on the received first control signals for the plurality of fields and for generating second control signals based on the stored first timing information for the plurality of fields, and
wherein the shutter glasses control the transmission and blocking of visible light at the right-eye shutter and the left-eye shutter using the second control signals.

2. The image display apparatus of claim 1, wherein
the shutter control circuit includes:
a clock generation section;
a counter section that performs counting based on a clock generated by the clock generation section and is reset with the received first control signals;
a storage section for storing output signals supplied from the counter section when the counter section receives the first control signals, as first timing information for the plurality of fields;
a timing setting section for setting second timing information based on the first timing information for the plurality of fields stored in the storage section; and
a control signal generation section that compares the second timing information set by the timing setting section with the output from the counter section and generates the second control signals.

3. The image display apparatus of claim 1, wherein
when a half or more than the half of the first control signals for the plurality of fields are missed, the shutter control circuit puts both of the right-eye shutter and the left-eye shutter into a transmitting state of visible light.

4. The image display apparatus of claim 1, wherein
the image display section is formed of a plasma display panel.

5. Shutter glasses used for viewing an image displayed on an image display section, wherein the image display section displays the image by alternately repeating a right-eye field for displaying a right-eye image signal and a left-eye field for displaying a left-eye image signal and transmits first control signals synchronous with the right-eye field and left-eye field, and wherein the shutter glasses receive the first control signals and include a right-eye shutter and a left-eye shutter for transmitting and blocking visible light,
the shutter glasses comprising a shutter control circuit for storing first timing information for a plurality of fields based on the received first control signals for the plurality of fields, and for generating second control signals based on the stored first timing information for the plurality of fields,
wherein the shutter glasses control the transmission and blocking of visible light at the right-eye shutter and left-eye shutter using the second control signals.

6. The shutter glasses of claim 5, wherein
the shutter control circuit includes:
a clock generation section;
a counter section that performs counting based on a clock generated by the clock generation section and is reset with the received first control signals;
a storage section for storing output signals supplied from the counter section when the counter section receives the first control signals, as first timing information for the plurality of fields;
a timing setting section for setting second timing information based on the first timing information for the plurality of fields stored in the storage section; and
a control signal generation section that compares the second timing information set by the timing setting section with the output from the counter section and generates the second control signals.

7. The shutter glasses of claim 5, wherein
when a half or more than the half of the first control signals for the plurality of fields are missed, the shutter control circuit puts both of the right-eye shutter and the left-eye shutter into a transmitting state of visible light.
